# EUROPEAN PATENT SPECIFICATION

(11) **EP 1 121 216 B1**
(45) Date of publication and mention of the grant of the patent: **07.04.2004**
(21) Application number: 99970346.5
(22) Date of filing: 05.10.1999
(51) Int. Cl.: B23B 51/04

(54) **CUTTING INSERT FOR DRILL**
SCHNEIDEINSATZ FÜR BOHRER
PIECE DE COUPE AMOVIBLE POUR FOREUSE

(30) Priority: 13.10.1998 SE 9803477
(43) Date of publication of application: 08.08.2001
(73) Proprietor: SANDVIK AKTIEBOLAG, 811 81 Sandviken (SE)
(72) Inventor: WIMAN, Jörgen, S-811 52 Sandviken (SE); SJÖLANDER, Ake, S-811 38 Sandviken (SE)
(74) Representative: Taquist, Lennart
(86) International application number: PCT/SE1999/001776
(87) International publication number: WO 2000/021704

(56) References cited:
- WO-A1-95/30505
- WO-A1-98/07539
- US-A- 5 503 509

## Description

The present invention relates to a cutting insert for metal drilling. The insert is intended to be secured into a drill body that can be equipped with several identically shaped inserts. The drill body is normally provided with chip flutes and a first inner insert location close to the drill centre and a second outer insert location close to the periphery. This type of drill has cylindrical basic shape defined by a diameter whilst being rotatable around a first central line.

A drill of this type is according to the preamble of claim 1, e.g. known from EP-A-181 844. The inserts therein are basically of rectangular shape where the short end surfaces are confined by two cutting edges which intersect at an obtuse angle, wherein the radically outer insert is indicated such that it defines the diameter of the drilled hole whereas the longitudinal axis of the radially inner insert extends parallel with the centre axis of the drill whilst overlapping the same.

When providing drills of the aforementioned type it is often difficult to achieve desirable small diameters and at the same time achieve desirable surface finish when drilling in metallic workpieces. Thus, a primary object of the present invention is to provide a new type of cutting insert for drills that enables achieving improved surface finish when drilling in metal. Another object of the present invention is to provide a new type of insert for drills with such optimized geometry that increased feel is possible during drilling without simultaneously impaired surface finish of the hole wall in the hole to be drilled. These and other objects are achieved by the insert of the present invention, which is characterized by the features as outlined in the subsequent patent claims.

The invention will be described in further detail in connection with the following drawings showing preferred embodiments of the invention.
Fig. 1 shows a side view of the cutting portion of a drill shank intended to be equipped with an insert of the invention.
Fig. 2 shows a perspective view of the front portion of a drill to be equipped with an insert of the invention.
Fig. 3 shows a side view of a drill with inserts as in Fig. 2.
Fig. 4 shows a sectional view along the line IV-IV in Fig. 3.
Fig. 5 shows an enlarged view of a nose portion of a drill insert of the invention.
Fig. 6 shows an enlarged side view of a nose portion of a drill insert according to an alternative embodiment of the invention.
Fig. 7 shows a drill shank with a drill insert according to an alternative embodiment of the invention, and
Fig. 8 shows an enlarged plan view of a drill insert according to Fig. 5.

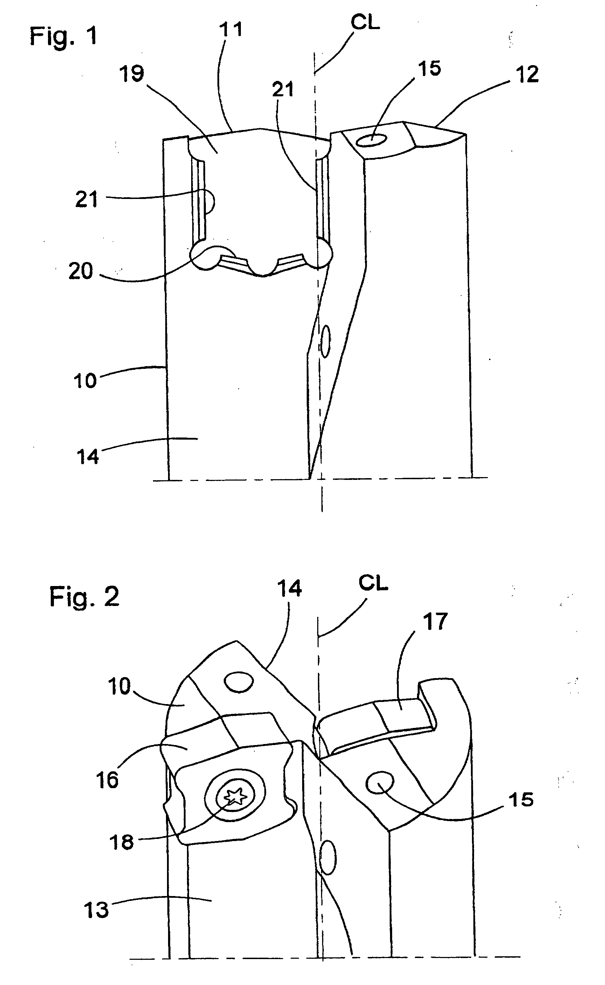

Fig 1-3 show a drill comprising a cylindrical drill shaft 10, the front of which is provided with two radially spaced insert sites 11 and 12 located on mutual sides of the centre line CL of the drill.

The drill shank 10 has straight or spirally shaped passages 13, 14 for the flow of chips next to the insert sites 11, 12 on each side of the centre line CL. The drill shank 10 also has channels 15 for transporting cooling medium to the front cutting end of the drill.

The insert sites 11, 12 are provided to receive two inserts 16, 17 which are cetrally apertured and intended to be secured by a central screw 18 that is threadably engaged in the drill shank 10. One insert 17 is a central insert and the other is a peripherical insert 16 obliquely arranged in relation to the centre line CL such that it defines the size of the drilled hole. There remains a waist portion M between said outer and inner inserts having such width that sufficient strength is achieved. The dimensions of the drill are defined by diameter D. Each insert site comprises a tangential support surface 19, an axial support surface 20 and a radial support surface 21.

Each insert has polygonal basic shape in this case rhomboidal basic shape with two opposed plane parallel flat surfaces 22 and 23, which are joined by edge surfaces corresponding to short and elongated sides of the rectangle. The underneath surface 22 of the insert is smaller than the upper surface 23 such that the insert appears with positive clearance angle. The intersection lines between the upper flat surface and the short end surfaces represent main cutting edges 24, 25 whereby each main cutting edge is angularly broken at an obtuse angle at the middle thereof, said obtuse angle designated δ. Each said cutting edge is smoothly curved at its end to provide nose positions 26, 27 between which the insert has its largest width w₁. Alternatively, the insert could have so called trigonal shape, i.e. a basically triangular insert with angularly broken edge surfaces.

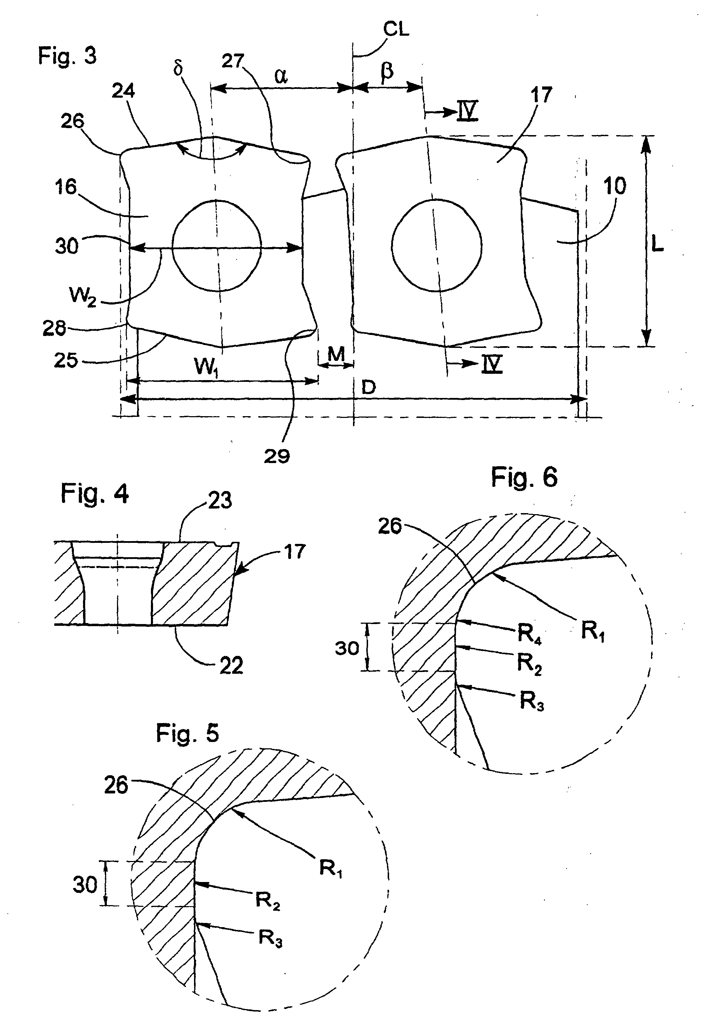

As appears from Fig. 3 both the outer insert 16 and the inner insert 17, due to their inclined rhomboidal shape, are inclined in relation to the central axis. The central insert is located a portion axially in front of the outer insert so as to improve the control of the radial forces such that the intended diameter can be kept. The outer insert 16 is inclined at an angle α and the inner insert at an angle β such that α < β. The insert could, alternatively, have straight rectangular basic shape in accordance with the embodiment described in Swedish Patent 455 676, which means that the insert could be considered as consisting of two regular triangles having broken sides whereby two of its comers and one side of said triangle coincide with the cutting edge of the insert and the third corner of each triangle overlap each other with a distance that corresponds with the straight portion of the longitudinal sides of the insert, said distance being 0.4 - 0.8 mm times the total length L of said insert. In such case the insert obtains elongated polygonal basic shape such that the upper and lower flat surfaces are joined by two short and two elongated edge surfaces where cutting edges are provided along portions of the intersection lines between the short edge surfaces and the upper flat surface. In that case the short edge surfaces are also broken at the middle of the cutting edges so that each cutting edge appears at an inner obtuse angle δ at said broken point.

In accordance with the invention the end portions of the edge surfaces are in the form of curved nose portions 26, 27 provided at comer portion extending from the remainder of the insert. The nose radius surface of each such comer is confined by a plurality of circular segments which intersect with the upper insert surface to provide edge portions with different radii R₁, R₂ and R₃ as shown in enlarged sections in Fig. 5. Adjacent segments always appear with different radius portions. The radius R₂ shall always be larger than R₁, which contributes to a surface finish improving "wiper"-effect along the secondary edge 30. This applies both at machining by axial drilling forwards into the workpiece as well as during axial displacement of the drill in opposite direction. The radius R₃ is somewhat smaller than both R₁ and R₂. When using the idea of the invention on an inclined rhomboidal insert as shown in Fig. 3 the size of radiussed edges R₁, R₂, R₃ of diagonally opposed nose portions 26, 29 that provide radiussed edges along upper surfaces 23 and to be located in radially outer portion, should be somewhat larger than corresponding radiussed edges provided at the other pair of diagonally opposed nose portions 27, 28.

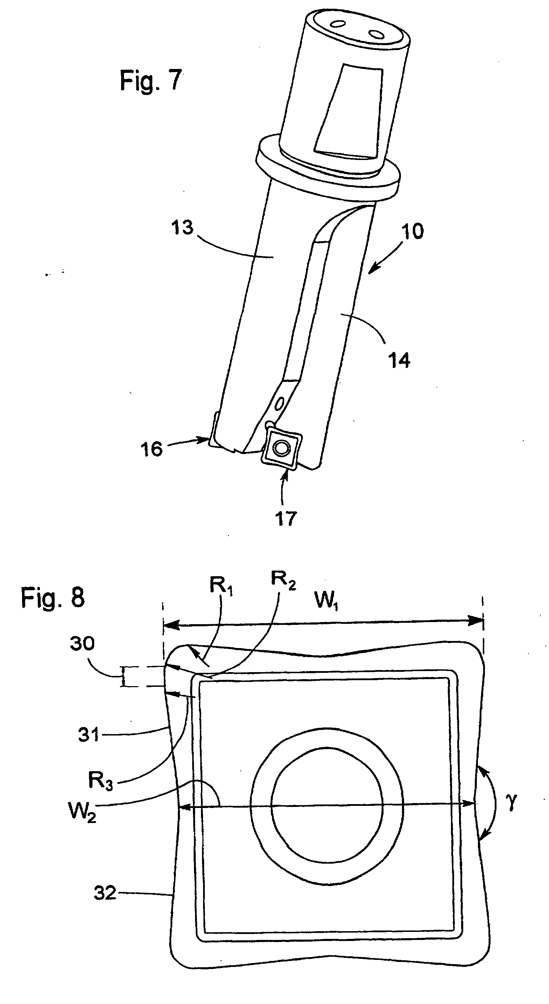

In Fig. 6 - 7 are shown an insert and a drill tool equipped with such insert according to an alternative embodiment of the invention. As appears therefrom the insert has in this case regular square shape where the nose radius surface in direction away from the cutting corner extends into a straight edge surface 31 that is inclined inwards towards the insert which under obtuse angle γ meets at the middle of the insert with an edge surface 32 that extends straightly from the opposite comer such that a distinguished waist portion is provided on the insert along each of the four edge surfaces. The largest width of the insert is designated w₁ and its smallest width is designated w₂. The appearance of the nose radius surface at each comer portion is, in all other aspects, identical with the appearance shown in Fig. 5 comprising a plurality, in this case three circular segments that provide edge portions with three different radii R₁, R₂, R₃.

In Fig. 6 there is an enlarged portion of an alternative embodiment of the invention where the nose radiussed surface comprises four different circular segments that provide edge portions with four different radii R₁, R₂, R₃ and R₄.

The primary radiussed edge 26 ought to have a somewhat smaller radius R₁ closest to the main cutting edge 24 compared with the radius R₂ of secondary edge 30. Further, there should be provided one radiussed edge with smaller radius R₄ compared with the radius R₁ provided between nose radius edge 26 and secondary edge 30.

In order to achieve optimized chip control the various radiussed edges ought to lie in the following ranges:

| | |
|---|---|
| R₁ | 0.2 - 1.6 mm |
| R₂ | 1.6 - 10.0 mm |
| R₃ | 0.1 - 1.0 mm |
| R₄ | 0 - 1.0 mm |

As regards radii R₁ and R₂ the choice of dimension depends on which drill diameter that shall be used. For drills in diameter range 13 -18 mm the radius R₁ should amount to 0.2 - 0 .4 mm and R₂ should amount to 1.6 - 4.0 mm. For drills in diameter range 18 - 58 mm the radius R₁ should be 0.4 - 1.6 mm and radius R₂ should then be 2.5 -10 mm.

The length of secondary edge 30 should have a value in the range 0.1 -0.5 mm.

## Claims

1. Drill insert of polygonal shape with upper and lower flat surface (22, 23) and with edge surfaces adjoining said flat surfaces, wherein said lower flat surface (22) is smaller than said upper flat surface (23) such that the insert obtains a positive cutting geometry, and wherein the end portion of the edge surfaces are provided as curved nose portions (26, 27, 28, 29),
each edge surface for cutting machining has an angularly broken contour, comprising partial surfaces that intersect at an obtuse angle, the drill insert further **characterized in that** :
the nose portion in each cutting corner has a nose radius surface confined by a plurality of circular segments which intersect with the upper flat surface to provide edge portions having several differently sized radii (R₁, R₂, R₃).

2. Drill insert according to claim 1, **characterized in that** the insert has straight rectangular basic shape where the short surfaces are confined by two under obtuse angle (δ) located cutting edges.

3. Drill insert according to claim 1, **characterized in that** the insert has an inclined rhomboidal basic shape where the radiusses of those diagonally opposed nose portions (26, 29) intended to be in radial outer position are larger than the radiusses of the other pair of diagonally opposed nose portions (27, 28).

4. Drill insert according to claim 1, **characterized in that** the insert has square basic shape where the edge surfaces (30, 31) are confined by two inwards-downwards extending straight edges that meet under obtuse angle (γ) such that a distinguished waist portion is provided such that the distance (w₂) between two opposed waist portions is smaller than the distance between both ends (w₁) of the respective cutting edge.

5. Drill insert according to claims 1-4, **characterized in that** the radiussed nose edge (26) at the cutting corner comprises a radius (R₁) located next to the main cutting edge (24) that is smaller than the radius (R₂) of the secondary cutting edge (30).

6. Drill insert according to claims 1 - 5 , **characterized in that** there is provided a radius (R₄) smaller than radius (R₁) between the nose radiussed edge (26) and secondary edge (30).

7. Drill insert according to claim 1, **characterized in that** the insert has triangular basic shape with angularly broken edge surfaces.

## Patentansprüche

1. Bohreinsatz polygonaler Form mit oberer und unterer flacher Oberfläche (22, 23) und mit sich an diese flachen Oberflächen anschließenden Kantenflächen, wobei die untere flache Oberfläche (22) kleiner ist als die obere flache Oberfläche (23) derart, daß der Einsatz eine positive Schneidgeometrie erhält, und wobei der Endabschnitt der Kantenoberflächen als gekrümmte Nasenabschnitte (26, 27, 28, 29) vorgesehen ist und jede Kantenoberfläche für das schneidende Bearbeiten eine winkelig gebrochene Kontur hat mit Teiloberflächen, die sich unter einem stumpfen Winkel schneiden, wobei der Bohreinsatz ferner **dadurch gekennzeichnet ist, daß** der Nasenabschnitt in jeder Schneidecke eine Nasenradiusfläche hat, welche durch eine Vielzahl von kreisförmigen Segmenten begrenzt ist, die sich mit der oberen flachen Oberfläche schneiden, um Kantenabschnitte vorzusehen, die einige Radien (R₁, R₂, R₃) unterschiedlicher Größe haben.

2. Bohreinsatz nach Anspruch 1, **dadurch gekennzeichnet, daß** der Einsatz eine gerade, rechteckige Grundgestalt hat, bei welcher die kurzen Oberflächen durch zwei unter stumpfem Winkel (δ) angeordnete Schneidkanten begrenzt sind.

3. Bohreinsatz nach Anspruch 1, **dadurch gekennzeichnet, daß** der Einsatz eine geneigte rhombische Grundgestalt hat, bei der die Radien jener diagonal gegenüberliegender Nasenabschnitte (26, 29), die dafür vorgesehen sind, in radial äußerer Position zu sein, größer sind als die Radien des anderen Paares diagonal gegenüberliegender Nasenabschnitte (27, 28).

4. Bohreinsatz nach Anspruch 1, **dadurch gekennzeichnet, daß** der Einsatz quadratische Grundgestalt hat, bei welcher die Kantenflächen (30, 31) durch zwei sich einwärts nach unten erstreckende gerade Kanten begrenzt sind, die sich unter stumpfem Winkel (γ) derart treffen, daß ein unterschiedlich eingezogener Mittelabschnitt derart vorgesehen ist, daß der Abstand (w₂) zwischen zwei gegenüberliegenden, eingezogenen Abschnitten kleiner ist als der Abstand zwischen beiden Enden (w₁) der entsprechenden Schneidkante.

5. Bohreinsatz nach den Ansprüchen 1 bis 4, **dadurch gekennzeichnet, daß** die mit Radius versehene Nasenkante (26) an der Schneidecke einen Radius (R₁) aufweist, der nächst der Hauptschneidkante (24) angeordnet ist, welcher kleiner ist als der Radius (R₂) der Nebenschneidkante (30).

6. Bohreinsatz nach den Ansprüchen 1 bis 5, **dadurch gekennzeichnet, daß** ein Radius (R₄) vorgesehen ist, der kleiner ist als der Radius (R₁) zwischen der mit Radius versehenen Nasenkante (26) und der Nebenkante (30).

7. Bohreinsatz nach Anspruch 1, **dadurch gekennzeichnet, daß** der Einsatz eine dreieckförmige Grundgestalt hat mit winkelig gebrochenen Kantenflächen.

## Revendications

1. Plaquette de foret de forme polygonale présentant une surface plane supérieure et inférieure (22, 23) et présentant des surfaces d'arête contiguës auxdites surfaces planes, où ladite surface plane inférieure (22) est plus petite que ladite surface plane supérieure (23) de sorte que la plaquette obtient une géométrie de coupe positive et où la partie d'extrémité des surfaces d'arête est réalisée sous la forme de parties de bec courbe (26, 27, 28, 29),
chaque surface d'arête destinée à un usinage par coupe présente un contour discontinu angulairement, comprenant des surfaces partielles qui se recoupent suivant un angle obtus, la plaquette de foret étant **caractérisée en outre en ce que** :
les parties de bec dans chaque coin de coupe présentent une surface d'arrondi de bec limitée par une pluralité de segments circulaires qui se recoupent avec la surface plane supérieure pour fournir des parties d'arête présentant plusieurs rayons de taille différente (R₁, R₂, R₃).

2. Plaquette de foret selon la revendication 1, **caractérisée en ce que** la plaquette présente une forme de base rectangulaire droite où les surfaces courtes sont limitées par deux arêtes de coupe positionnées selon un angle obtus δ.

3. Plaquette de foret selon la revendication 1, **caractérisée en ce que** la plaquette présente une forme de base rhomboïdale inclinée où les rayons des parties de bec diagonalement opposées (26, 29) prévues pour être dans une position extérieure radiale sont plus grands que les rayons de l'autre paire de parties de bec diagonalement opposées (27, 28).

4. Plaquette de foret selon la revendication 1, **caractérisée en ce que** la plaquette présente une forme de base carrée où les surfaces d'arête (30, 31) sont limitées par deux arêtes droites s'étendant vers l'intérieur et vers le bas qui se rencontrent selon un angle obtus (γ) de sorte qu'une partie d'âme discernée est prévue de sorte que la distance (w₂) entre deux parties d'âme opposée est plus petite que la distance entre les deux extrémités (w₁) de l'arête de coupe respectives.

5. Plaquette de foret selon les revendications 1 à 4, **caractérisée en ce que** l'arête de bec arrondie (26) au niveau du coin de coupe comprend un rayon (R₁) situé à proximité de l'arête de coupe principale (24) qui est plus petit que le rayon (R₂) de l'arête de coupe secondaire (30).

6. Plaquette de foret selon les revendications 1 à 5, **caractérisée en ce qu'**il est prévu un rayon (R₄) plus petit que le rayon (R₁) entre l'arête arrondie de bec (26) et l'arête secondaire (30).

7. Plaquette de foret selon la revendication 1, **caractérisée en ce que** la plaquette présente une forme de base triangulaire présentant des surfaces d'arête angulairement discontinues.
